(19) **Europäisches Patentamt / European Patent Office / Office européen des brevets**

(11) **EP 4 217 761 B1**

(12) **FASCICULE DE BREVET EUROPEEN**

(45) Date de publication et mention de la délivrance du brevet:
**10.09.2025 Bulletin 2025/37**

(21) Numéro de dépôt: **21782712.0**

(22) Date de dépôt: **22.09.2021**

(51) Classification Internationale des Brevets (IPC):
**G01S 13/91** (2006.01) **G01S 13/42** (2006.01)
**G01S 13/935** (2020.01)

(52) Classification Coopérative des Brevets (CPC):
**G01S 13/913; G01S 13/42; G01S 13/935**

(86) Numéro de dépôt international:
**PCT/EP2021/076030**

(87) Numéro de publication internationale:
**WO 2022/063810 (31.03.2022 Gazette 2022/13)**

(54) **PROCÉDÉ DE LOCALISATION D'UN AÉRONEF EN VOL**

VERFAHREN ZUR ORTUNG EINES FLUGZEUGS IM FLUG

METHOD FOR LOCATING AN AIRCRAFT IN FLIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2020 FR 2009720**

(43) Date de publication de la demande:
**02.08.2023 Bulletin 2023/31**

(73) Titulaire: **THALES**
**92400 Courbevoie (FR)**

(72) Inventeurs:
• **LEBRAT, Jean-Philippe**
**26027 VALENCE CEDEX (FR)**
• **COTTRON, Rodolphe**
**33700 MERIGNAC (FR)**
• **BOUARD, Dominique**
**26027 VALENCE CEDEX (FR)**

(74) Mandataire: **Lavoix**
**2, place d'Estienne d'Orves**
**75441 Paris Cedex 09 (FR)**

(56) Documents cités:
EP-A1- 0 898 717    EP-A1- 1 287 411
EP-A1- 3 179 275    US-B1- 10 705 201

**Description**

La présente invention concerne un procédé de localisation d'un aéronef en vol. La présente invention concerne aussi un dispositif de localisation associé. La présente invention porte aussi sur un aéronef comprenant un tel dispositif de localisation.

Les aéronefs sont classiquement équipés d'équipements de bord permettant d'aider au pilotage de l'aéronef. Notamment, lorsque les conditions de visibilité sont réduites (brouillard, neige, forte pluie), l'équipage ou le pilote de l'aéronef se réfère à de tels équipements, par exemple, pour les phases d'approche et d'atterrissage.

Pour permettre le bon fonctionnement de ces équipements, l'aéronef comprend des dispositifs de localisation de l'aéronef généralement basés sur des capteurs inertiels et/ou sur des capteurs de radionavigation.

Néanmoins, de tels dispositifs de localisation présentent des limites de fonctionnement. En particulier, les localisations obtenues par les capteurs inertiels ne sont pas suffisamment précises. Les capteurs de radionavigation sont, quant à eux, très dépendants de l'environnement, et donc susceptibles d'être brouillés ou affectés par une panne.

Les documents US 10 705 201 B et EP 3 179 275 A décrivent des exemples de procédé de localisation.

Il existe donc un besoin pour un procédé permettant de consolider les solutions de localisation conventionnelles d'un aéronef.

A cet effet, la présente invention a pour objet un procédé de localisation selon la revendication 1.

Selon d'autres aspects avantageux de l'invention, le procédé comprend une ou plusieurs des caractéristiques des revendications 2 à 9.

La présente invention concerne, en outre, un dispositif de localisation selon la revendication 10.

L'invention concerne aussi un aéronef selon la revendication 11.

D'autres caractéristiques et avantages de l'invention apparaîtront à la lecture de la description qui suit de modes de réalisation de l'invention, donnée à titre d'exemple uniquement, et en référence aux dessins qui sont :

- [Fig 1] figure 1, une représentation schématique d'un aéronef en vol, la zone survolée par l'aéronef étant un lieu d'atterrissage de l'aéronef comprenant une piste d'atterrissage,
- [Fig 2] figure 2, une représentation schématique vue de dessus d'un exemple de piste d'atterrissage et de la projetée horizontale d'un radar de l'aéronef dans le plan horizontal de la piste d'atterrissage,
- [Fig 3] figure 3, une représentation schématique d'un exemple du calculateur du dispositif de localisation,
- [Fig 4] figure 4, un organigramme d'un exemple d'un procédé de localisation, et
- [Fig 5] figure 5, un organigramme d'un exemple de la deuxième phase de détermination d'une position du procédé de localisation de la figure 4.

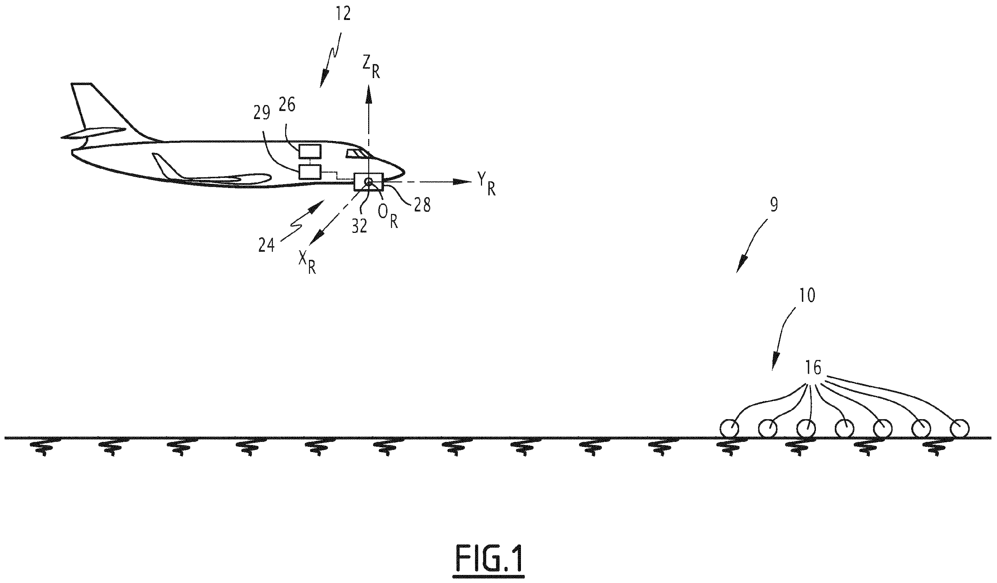

Une zone de l'espace 9 et un aéronef 12 en vol au-dessus de la zone de l'espace 9 sont illustrés par la figure 1.

Dans cet exemple particulier, la zone de l'espace 9 est un lieu d'atterrissage, plus précisément une piste d'atterrissage 10, et l'aéronef 12 est un avion. Dans cet exemple, l'aéronef 12 se rapproche de la piste d'atterrissage 10 en vue d'un atterrissage sur cette piste 10.

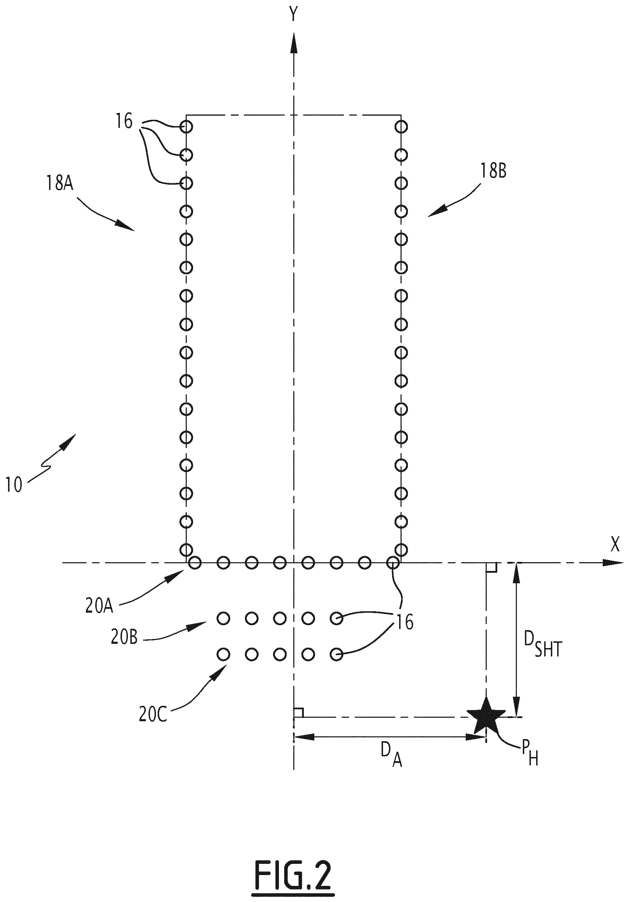

Comme illustré par la figure 2, la piste d'atterrissage 10 est une surface rectangulaire destinée à l'atterrissage et au décollage d'aéronefs. La piste d'atterrissage 10 comprend des bords longitudinaux (deux) et des extrémités transversales (deux) délimitant la piste d'atterrissage 10.

La longueur de la piste d'atterrissage 10 est, par exemple, comprise entre 3 kilomètres (km) et 4 km. La largeur de la piste d'atterrissage 10 est, par exemple, comprise entre 25 m et 45 m.

Dans l'exemple illustré par la figure 2, la piste d'atterrissage 10 présente un axe longitudinal dans la direction longitudinale de la piste 10 et à égale distance des bords longitudinaux de la piste 10. Cet axe longitudinal est appelé axe de la piste Y. Un axe perpendiculaire à l'axe de la piste Y est aussi représenté sur la figure 2, par la référence « X ».

La piste d'atterrissage 10 comprend un ensemble d'éléments caractéristiques 16. Par soucis de clarté, seuls certains éléments caractéristiques 16 sont numérotés sur la figure 2. Les éléments caractéristiques 16 sont, par exemple, des lampes, aussi appelées balises lumineuses. En variante, les éléments caractéristiques 16 sont des réflecteurs radar (type trièdres ou lentilles de Luneberg). Encore en variante, les éléments caractéristiques 16 sont d'autres éléments existants sur une piste d'atterrissage.

Dans cet exemple, les éléments caractéristiques 16 sont répartis sur la piste d'atterrissage 10 en au moins deux rangées longitudinales 18A, 18B et au moins une rangée transversale 20.

Les rangées longitudinales 18A, 18B sont sensiblement parallèles à l'axe de la piste Y. Deux des rangées longitudinales 18A, 18B sont disposées chacune le long d'un bord longitudinal distinct de la piste 10. Par le terme « disposé le long », il est entendu que les rangées sont disposées à moins de trois mètre du bord longitudinal correspondant.

La ou chaque rangée transversale 20 est sensiblement perpendiculaire à l'axe de la piste Y. Dans l'exemple illustrée par la figure 2, la piste d'atterrissage 10 comprend trois rangées transversales 20A, 20B, 20C d'éléments caractéristiques 16. La dernière rangée transversale 20A dans le sens d'atterrissage des aéronefs sur la piste 10 est appelée seuil de piste (rangée 20A dans l'exemple de la figure 2).

En variante, la piste d'atterrissage 10 comprend au moins trois rangées longitudinales : les deux rangées longitudinales 18A, 18B et une troisième rangée longitudinale 18C (non représentée) disposée le long de l'axe de la piste Y et en aval du seuil de piste.

L'homme du métier comprendra que cet exemple est donné à titre illustratif. La zone de l'espace 9 est plus généralement une zone survolée comprenant au sol sur un relief ou une surface connue des éléments caractéristiques 16 prédéterminés (réflecteurs) disposés en au moins une rangée. La zone de l'espace 9 est donc, par exemple, un lieu d'atterrissage ne comprenant pas de piste d'atterrissage ou une zone de contrôle ne permettant pas à l'aéronef 12 d'atterrir. En outre, l'aéronef 12 est, en variante, un hélicoptère ou un drone.

L'aéronef 12 comprend un dispositif électronique de localisation 24. Le dispositif de localisation 24 est porté par l'aéronef 12.

Un exemple d'un dispositif de localisation 24 est illustré par la figure 1. Dans cet exemple, le dispositif de localisation 24 comprend une première unité de localisation 26, une deuxième unité de localisation 28 et un calculateur 29.

La première unité de localisation 26 met en œuvre une solution de localisation, dite conventionnelle, choisie parmi une solution de localisation inertielle, une solution de localisation par radionavigation et une solution résultant de la combinaison des solutions inertielle et de radionavigation.

La première unité de localisation 26 comprend au moins un capteur choisi parmi un capteur inertiel et un capteur de radionavigation. Le capteur inertiel est, par exemple, un accéléromètre, un gyromètre ou un gyroscope. Le capteur de radionavigation est, par exemple, un GPS (acronyme de l'anglais « Global Positioning System » traduit en français par « Système de Positionnement Global »).

Plus précisément, dans le cas d'une solution de radionavigation, la première unité de localisation 26 comprend, par exemple, un système VOR (abréviation de l'anglais « VHF Omnidirectional Range » traduit en français par « Gamme VHF Omnidirectionnelle »), un système DME (abréviation de l'anglais « distance measuring equipment » traduit en français par « dispositif de mesure de distance »), un système GPS, un système SBAS, un système GBAS ou encore un système ILS. De tels systèmes répondent par exemple aux exigences de divers types d'approches pour l'atterrissage (NPA, LNAV, VNAV, LPV, ILS...).

La deuxième unité de localisation 28 met en œuvre une solution de localisation par radar.

La deuxième unité de localisation 28 comprend au moins un radar 32 en communication avec un calculateur, tel que le calculateur 29 du dispositif de localisation 24. Dans une variante, la deuxième unité de localisation 28 comprend un calculateur qui lui est propre pour traiter directement les mesures effectuées par le radar 32.

Le radar 32 définit un repère représenté sur la figure 1 par un repère cartésien de centre $O_R$, d'abscisses $X_R$, d'ordonnées $Y_R$ et d'élévation $Z_R$. L'axe des ordonnées $Y_R$ est l'axe longitudinal de la détection et est appelé axe du radar. Lorsque le radar 32 est correctement positionné sur l'aéronef 12, l'axe du radar $Y_R$ coïncide sensiblement avec la trajectoire de l'aéronef 12.

Le radar 32 est avantageusement un radar à onde millimétrique. De préférence, la résolution en distance du radar est de l'ordre de quelques mètres, et la résolution angulaire du radar est fine, c'est-à-dire de l'ordre de quelques dixièmes de degrés.

Le radar 32 comprend de préférence au moins trois voies de réception permettant de mesurer, pour chaque détection, la distance radiale de la détection, l'angle circulaire dans le repère du radar 32 de la détection et l'angle d'élévation dans le repère du radar 32 de la détection. La distance radiale d'un point quelconque M est sa distance à l'origine $O_R$ du repère. L'angle circulaire, ou la circulaire, est l'angle de la projection sur le plan $(O_R X_R Y_R)$ de l'angle porté par l'axe $(O_R Y_R)$ et la droite $(O_R C)$ passant par le point visé C. L'angle d'élévation est l'angle formé entre le plan $(O_R X_R Y_R)$ du radar 32 et la droite allant depuis le radar 32 vers le point visé C.

Le calculateur 29 est, par exemple, un ordinateur.

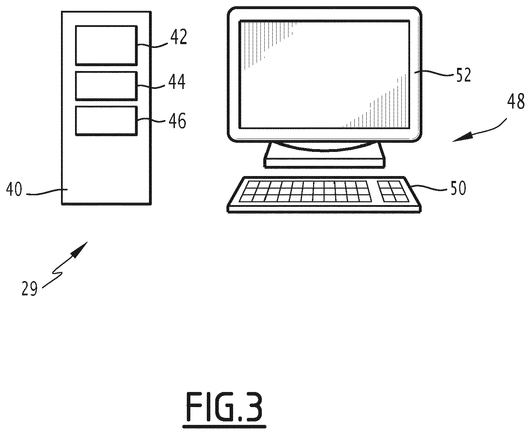

Dans l'exemple illustré par la figure 3, le calculateur 29 comprend un processeur 40 comprenant une unité de traitement de données 42, des mémoires 44, un lecteur de support d'information 46 et, optionnellement, une interface homme-machine 48 comprenant un clavier 50 et un afficheur 52.

L'unité de traitement 42 est en interaction avec un produit programme d'ordinateur. Le produit programme d'ordinateur comporte un support d'information. Le support d'information est un support lisible par l'unité de traitement 42. Le support lisible d'information est un medium adapté à mémoriser des instructions électroniques et capable d'être couplé à un bus d'un système informatique.

A titre d'exemple, le support d'informations est une clé USB, une disquette ou disque souple (de la dénomination anglaise « *Floppy disc* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'information est mémorisé le programme d'ordinateur comprenant des instructions de programme.

Le programme d'ordinateur est chargeable sur l'unité de traitement de données 42 et est adapté pour entraîner la mise en œuvre d'un procédé de localisation qui sera décrit dans la suite de la description.

Dans un autre exemple, le calculateur 29 est réalisé sous la forme d'un ou plusieurs composants logiques programmables, tel que des FPGA (de l'anglais *Field Programmable Gate Array*), ou encore sous la forme d'un ou plusieurs circuits intégrés dédiés, tel que des ASIC (de l'anglais *Application Specific Integrated Circuit*). Le calculateur 29 est dans ce cas configuré pour mettre en œuvre un procédé de localisation comme cela sera décrit dans la suite de la description.

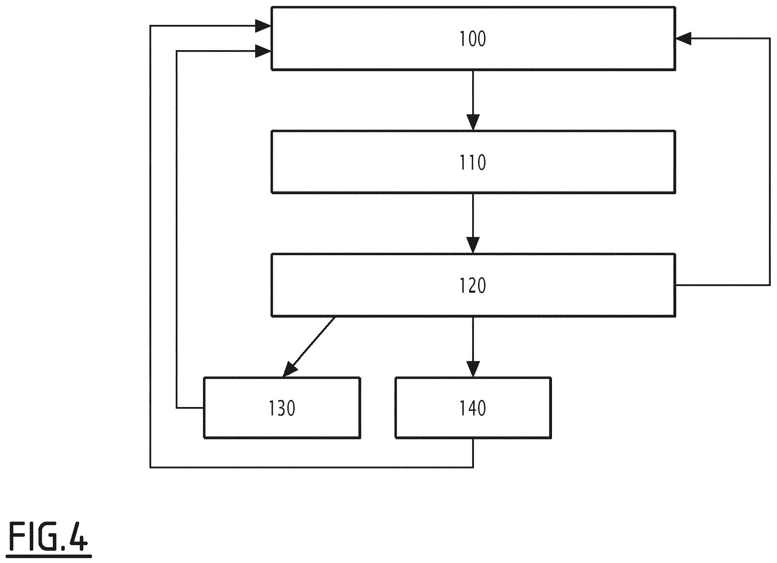

Le fonctionnement du dispositif de localisation 24 va maintenant être décrit en référence à la figure 4 qui illustre schématiquement un exemple de mise en œuvre d'un procédé de localisation.

Le procédé de localisation est destiné à être mis en œuvre lors d'un survol d'une zone comprenant au sol des éléments caractéristiques 16. Notamment, le procédé de localisation est particulièrement adapté aux phases d'approche par l'aéronef 12 d'un lieu d'atterrissage en vue de l'atterrissage de l'aéronef 12.

Le procédé de localisation est avantageusement mis en œuvre en temps réel, c'est-à-dire à chaque instant.

Le procédé de localisation comprend une première phase 100 de détermination d'une position de l'aéronef 12, dite première position, par la première unité de localisation 26 en fonction d'un signal fourni par le ou au moins un capteur de la première unité 26.

La première position est, ainsi, obtenue par une méthode conventionnelle inertielle et/ou de radionavigation. La première position donne lieu à des premières coordonnées.

Avantageusement, à l'issue de la première phase de détermination 100, il est aussi obtenu la vitesse de l'aéronef 12.

Le procédé de localisation comprend une deuxième phase 110 de détermination d'une position de l'aéronef 12, dite deuxième position, par la deuxième unité de localisation 28.

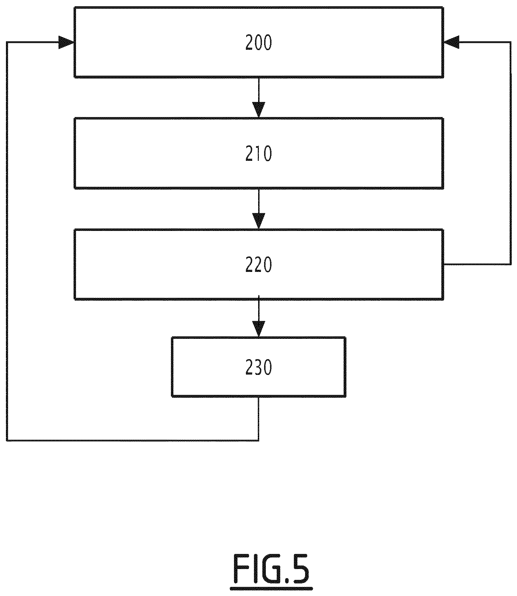

La deuxième phase de détermination 110 est mise en œuvre simultanément à la première phase de détermination 100, le but étant d'évaluer la position de l'aéronef 12 à un même instant. Un exemple de mise en œuvre de la deuxième phase de détermination 110 est illustré par la figure 5.

La deuxième phase de détermination 110 comprend une étape 200 de détection, par le radar 32, d'éléments caractéristiques 16 de la zone survolée, notamment de la piste d'atterrissage 10 dans l'exemple des figures 1 et 2.

Chaque détection est associée à des coordonnées. Notamment, chaque détection est définie par une distance radiale, un angle circulaire dans le repère du radar 32 et un angle d'élévation dans le repère du radar 32. A l'issue de l'étape de détection, il est ainsi obtenue une image radar sur laquelle sont représentées les détections.

De façon équivalente, après changement de repère, chaque détection peut être définie par une distance radiale D, un angle de site S, défini par rapport à l'horizontal locale à l'aéronef 12 et un angle de gisement G, défini par rapport à l'axe longitudinal de l'aéronef 12.

Par exemple, pour passer des coordonnées (élévation, circulaire) = (E,C) vers (site, gisement) = (S,G), on commence par calculer le vecteur directeur en cartésien $ux = cosE.cosC$, $uy = cosE.sinC$ et $uz = sinE$. On applique alors à ce vecteur la matrice de rotation correspondant à l'opposé de l'angle de calage radar en élévation, puis la matrice de rotation correspondant à l'opposé du roulis de l'aéronef, puis la matrice de rotation correspondant à l'opposé du tangage de l'aéronef. Le vecteur obtenu est en coordonnées cartésiennes dans le repère horizontal local à l'aéronef et les valeurs du site et gisement s'obtiennent en effectuant la transformation de cartésien vers polaire. Une telle opération suppose de connaître l'angle de calage en élévation du radar (lié à l'installation mécanique du radar sur l'aéronef), du roulis et du tangage de l'aéronef, généralement fournis par la centrale inertielle de l'aéronef.

Avantageusement, le radar 32 applique un traitement de type taux constant de fausses alertes (en anglais CFAR pour « constant false alarm rate ») sur l'image radar obtenue, ce qui permet une meilleure détection des éléments caractéristiques 16. Ainsi, temporellement, on commence par former une « image radar » à partir des signaux rétrodiffusés par le sol et reçus par le radar. A cette image, on applique un traitement CFAR qui permet de fournir une liste de détections avec leurs coordonnées.

La deuxième phase de détermination 110 comprend une étape 210 de détermination, en fonction des coordonnées des éléments caractéristiques 16 détectés, du décalage angulaire T entre l'axe du radar $Y_R$ et une droite parallèle ou perpendiculaire à la ou au moins l'une des rangées d'éléments, dite droite de référence. La droite de référence est une droite prédéterminée en fonction de la zone survolée et de la géométrie des éléments caractéristiques 16 sur la zone survolée. Dans l'exemple illustré par les figures 1 et 2, la droite de référence est l'axe de la piste Y. L'étape de détermination 210 est mise en œuvre par le calculateur 29.

L'étape de détermination du décalage angulaire T comprend par exemple :

- la conversion des coordonnées de chaque détection en coordonnées cartésiennes,
- pour chaque valeur de décalage angulaire $T_{test}$ comprise dans un intervalle de valeurs prédéterminées, la détermination, pour chaque détection, d'une coordonnée cartésienne selon l'axe des abscisses, corrigée de la valeur dudit décalage angulaire $T_{test}$,
- pour chaque valeur de décalage angulaire $T_{test}$ comprise dans l'intervalle de valeurs prédéterminées, la détermination du nombre de détections correspondant à chaque coordonnée cartésienne corrigée selon l'axe des abscisses, la valeur de décalage angulaire $T_{test}$ associée au plus grand nombre de détections étant le décalage angulaire T entre l'axe du radar $Y_R$ et la droite de référence.

Un exemple plus spécifique de détermination du décalage angulaire T est donné lorsque la droite de référence est l'axe Y de la piste d'atterrissage 10 (figures 1 et 2). Dans cet exemple, il est exploité le fait que les éléments caractéristiques 16 sont alignés en rangées parallèles à l'axe de la piste Y.

Dans cet exemple, l'étape de détermination du décalage angulaire T comprend la conversion des coordonnées des éléments détectés en coordonnées cartésiennes. Les coordonnées cartésiennes sont données par les formules suivantes :

$$x = D.\cos S.\sin G \qquad (1)$$

$$y = D.\cos S.\cos G \qquad (2)$$

Où :

- x désigne une coordonnée cartésienne selon l'axe des abscisses,
- y désigne une coordonnée cartésienne selon l'axe des ordonnées,
- D désigne la distance radiale,
- S désigne l'angle de site, et
- G désigne l'angle de gisement.

Ensuite, l'étape de détermination 210 comprend, pour des valeurs tests de décalage angulaire $T_{test}$, la détermination, pour chaque détection, d'une coordonnée cartésienne selon l'axe des abscisses, corrigée de la valeur dudit décalage angulaire $T_{test}$. Les valeurs tests de décalage angulaire $T_{test}$ sont les valeurs comprises dans un intervalle de valeurs prédéterminé avec un pas prédéterminé. L'intervalle de valeurs est, par exemple, compris entre -10 degrés (°) et 10 ° et le pas prédéterminé égal au dixième de degrés. Ainsi, pour chaque valeur test de décalage angulaire $T_{test}$, les coordonnées cartésiennes selon l'axe des abscisses des détections sont obtenues par la formule suivante :

$$x = D.\cos S.\sin(G + T_{test}) \qquad (3)$$

Puis, pour chaque valeur test de décalage angulaire $T_{test}$, l'étape de détermination 210 comprend la détermination du nombre de détections correspondant à chaque coordonnée cartésienne corrigée selon l'axe des abscisses. La valeur de décalage angulaire $T_{test}$ associée au plus grand nombre de détections est le décalage angulaire T entre l'axe du radar $Y_R$ et l'axe de la piste Y. Cela revient à réaliser, pour chaque valeur test de décalage angulaire $T_{test}$, un histogramme des positions selon l'axe des abscisses (en x) et à compter, pour chaque intervalle suivant l'axe x, le nombre de détections dont la position en x est donnant le pic le plus haut (quelle que soit la valeur de x), ce qui traduit le fait que les détections ont été alignées au mieux par rapport à l'axe de la piste Y.

Optionnellement, le décalage angulaire T est affiné par recherche de la position du maximum de la régression d'ordre deux autour de ce pic.

Dans un deuxième exemple, le décalage angulaire T est obtenu en effectuant une analyse par composante principale (ACP) de la liste des détections. Dans ce cas, il est d'abord calculé la matrice de covariance des couples (x,y), ce qui permet d'en déduire les vecteurs propres et enfin le décalage angulaire T.

Dans un troisième exemple, le décalage angulaire T est obtenu en appliquant une transformée de Hough à la liste des détections, et le point d'accumulation donne le décalage angulaire T

Les deuxième et troisième exemples donnent toutefois des résultats moins robustes que le premier exemple, car chaque élément caractéristique ne correspond pas toujours à une détection (probabilité de détection < 1), ou certaines détections peuvent ne pas être des éléments caractéristiques 16 (autres objets à proximité de la piste pouvant conduire à une détection, ou fausse alarme).

A l'issue de l'étape de détermination 210, les coordonnées des détections en cartésien corrigées du décalage angulaire T, appelées coordonnées cartésiennes optimales, sont données par les formules suivantes :

$$x = D.\cos S.\sin(G + T) \qquad (4)$$

$$y = D.\cos S.\cos(G + T) \qquad (5)$$

La deuxième phase de détermination 110 comprend une étape 220 de détermination de la position relative de l'aéronef 12 par rapport à la zone survolée en fonction du décalage angulaire T déterminé et des coordonnées des éléments caractéristiques 16 détectés. L'étape de détermination 220 est mise en œuvre par le calculateur 29.

Pour cela, il est déterminé la distance de la projection orthogonale sur la droite passant par la ou au moins l'une des rangées d'éléments de la projetée horizontale $P_H$ du radar, dite première distance D1. La projetée horizontale $P_H$ du radar est la projection orthogonale de la position du radar au sol.

Il est également déterminé la distance de la projection orthogonale sur une droite, perpendiculaire à la ou au moins l'une des rangées d'éléments, de la projetée horizontale $P_H$ du radar, dite deuxième distance D2.

La deuxième position de l'aéronef 12 est alors obtenue en fonction de la première distance D1 et de la deuxième distance D2 déterminées.

Dans le cas où la zone survolée est une piste d'atterrissage (exemple des figures 1 et 2), la première distance D1 est la distance de la projection orthogonale sur l'axe de la piste Y de la projetée horizontale $P_H$ du radar 32, appelée décalage axial $D_A$. La projetée horizontale $P_H$ du radar 32 est la projection orthogonale de la position du radar 32 dans le plan horizontal de la piste 10. La deuxième distance D2 est la distance de la projection orthogonale sur la droite passant par le seuil de piste de la projetée horizontale $P_H$ du radar 32, appelée distance au seuil de piste $D_{SHT}$.

Un exemple plus spécifique de détermination du décalage axial $D_A$ et de la distance au seuil de piste $D_{SHT}$ est donné dans ce qui suit.

Par exemple, le décalage axial $D_A$ est obtenu par détermination d'un histogramme des positions selon l'axe des abscisses de chaque détection en fonction des coordonnées cartésiennes optimales de chaque détection. L'histogramme obtenu présente autant de pics que de rangées longitudinales d'éléments caractéristiques 16 sur la piste 10. En conséquence, l'histogramme comprend au moins deux pics latéraux correspondants aux deux rangées longitudinales 18A, 18B s'étendant le long des bords longitudinaux de la piste d'atterrissage 10. Le décalage axial $D_A$ correspond, par exemple, à la moyenne des cordonnées selon l'axe des abscisses (en x) des deux pics latéraux.

En variante, lorsque la piste 10 présente en outre une rangée longitudinale d'éléments caractéristiques 16 s'étendant le long de l'axe de la piste Y, l'histogramme obtenu présente aussi un pic central entre les deux pics latéraux. Dans ce cas, le décalage axial $D_A$ est, par exemple, la position en x du pic central.

Par exemple, la distance au seuil de piste $D_{SHT}$ est obtenue par détermination d'un histogramme des positions selon l'axe des ordonnées de chaque détection en fonction des coordonnées cartésiennes optimales de chaque détection. L'histogramme obtenu présente autant de pics que de rangées transversales d'éléments caractéristiques 16 sur la piste 10. La distance au seuil de piste $D_{SHT}$ est dans ce cas, la coordonnée selon l'axe des ordonnées (en y) du pic le plus éloigné, c'est-à-dire le pic ayant la plus grande coordonnée en y.

Optionnellement, la deuxième phase de détermination 110 comprend aussi une étape 230 de détermination de la vitesse horizontale de l'aéronef 12 par rapport à la droite de référence (axe de la piste Y dans le cas des figures 1 et 2) exprimée selon deux composantes Vx, Vy en fonction de la variation au cours du temps de la première distance D1 et de la variation au cours du temps de la deuxième distance D2. La composante Vx est la composante de la vitesse projetée sur l'axe des abscisses. La composante Vy est la composante de la vitesse projetée sur l'axe des ordonnées. L'étape de détermination 140 est mise en œuvre par le calculateur 29.

Un exemple de mise en œuvre de cette étape est donné dans le cas des figures 1 et 2 (piste d'atterrissage 10).

En particulier, la variation au cours du temps de la distance au seuil de piste $D_{SHT}$ donne la composante Vy de la vitesse, et la variation au cours du temps du décalage axial $D_A$ donne la composante Vx de la vitesse. Par exemple, de telles variations au cours du temps sont calculées au moyen d'un filtre de Kalman.

Le procédé de localisation comprend une phase 120 de comparaison de données associées à la première position déterminée lors de la phase 100 et de données associées à la deuxième position déterminée lors de la phases 110. A l'issue de cette phase 120 de comparaison, la première position est validée ou invalidée. Par exemple, lorsque la première position est invalidée, une alerte est déclenchée. La phase de comparaison 120 est mise en œuvre par le calculateur 29.

Dans un premier mode de mise en œuvre de la phase de comparaison 120, la première position est comparée à la deuxième position en vue de valider ou non la première position. Notamment, la première position est associée à un premier écart-type et la deuxième position est associée à un deuxième écart-type. L'incertitude sur la première position est matérialisée par un premier ellipsoïde dont le centre est la première position et le rayon est fonction du premier écart-type. L'incertitude sur la deuxième position est matérialisée par un deuxième ellipsoïde dont le centre est la deuxième position et le rayon est fonction du deuxième écart-type. La phase de comparaison comprend l'invalidation de la première position lorsque le premier ellipsoïde et le deuxième ellipsoïde sont disjoints, notamment lorsque le deuxième ellipsoïde n'est pas inclus dans le premier ellipsoïde. Dans ce cas, une alerte est, par exemple, déclenchée.

Un exemple de mise en œuvre de cette comparaison est donnée dans ce qui suit. Pour chacune des données de localisation ($d$= position notée $p$, ou vitesse notée $v$) de l'aéronef (noté $A$) issues des 2 sources ($s$ = source primaire (capteur inertiel et/ou de radionavigation, phase 100) notée en majuscule $P$ ou $V$, ou source secondaire (radar, phase 110) notée en minuscule $p$ ou $v$), nommons $\sigma_{d\_s\_e}$ son écart-type suivant la direction de l'axe $e$ (X, Y, Z) d'un repère cartésien spatial lié à la piste (ReperePiste) :

$\sigma_{d\_s\_e}$ est la racine carrée du terme diagonal de la ligne e de la matrice des covariances $MatCov\_d\_s_{A[ReperePiste]}$ et $MatCov\_P_{A[ReperePiste]}$ représente la matrice des covariances de la position (P) de l'aéronef (A) issue de la source primaire (P en majuscule) et exprimée dans le repère *ReperePiste.*

Ainsi, $\sigma_{d\_s\_X}$, $\sigma_{d\_s\_Y}$ et $\sigma_{d\_s\_Z}$ représentent respectivement les écarts-types latéral, longitudinal et vertical des données de localisation de l'aéronef à guider.

La distance entre les données de localisation issues des deux sources est calculée dans le repère ReperePiste par la norme euclidienne :

$$\Delta_{Position} = \left\| \overrightarrow{P_A \, p_A} \right\| \text{ et } \Delta_{Vitesse} = \left\| \overrightarrow{V_A} - \overrightarrow{v_A} \right\|$$

Nommons $\Delta_{d\_e}$ la projection de la distance entre les données de localisation (d = position, vitesse), issues des deux sources, sur les axes (e = X, Y et Z) du ReperePiste.

Nommons $Max_{d\_e}$ l'incertitude maximum admissible de la donnée de localisation *d* sur l'axe e. Cette incertitude maximum est, par exemple, connue.

Renommons $P_{SensorError(i)} = ProbaErr_{d\_s}$ la probabilité acceptable d'erreur de la donnée de localisation *d* issue de la source s.

Nommons $k_{d\_s}$ le coefficient appliqué à l'écart-type de la donnée de localisation *d* issue de la source s pour assurer un rayon de protection cohérent de l'objectif d'intégrité de cette source : $k_{d\_s} = norminv \left( 1 - \frac{ProbaErr_{d_s}}{2} \right)$ où $k_{d\_s} \cdot \sigma_{d\_s\_e}$ représente l'incertitude de la donnée *d* issue de la source s et suivant l'axe *e*.

Une alerte d'intégrité est levée sur la donnée de localisation *d* si la relation suivante est satisfaite sur l'un (au moins) quelconque des trois axes e (*s1* = source primaire et *s2* = source secondaire de la donnée de localisation *d*) :

$$\Delta_{d\_e} + k_{d\_s1} \cdot \sigma_{d\_s1\_e} > Max_{d\_e}$$

ou

$$\Delta_{d\_e} + k_{d\_s2} \cdot \sigma_{d\_s2\_e} > k_{d\_s1} \cdot \sigma_{d\_s1\_e}$$

En appliquant cet algorithme et sous hypothèse d'indépendance des sources *s1* et *s2*, la probabilité d'erreur résultante de la donnée de localisation *d* :

$$P_{SystemError\_d} = ProbaErr_{d\_s1} \cdot ProbaErr_{d\_s2.}$$

Cette phase de comparaison permet de contenir l'erreur résultante de localisation dans des limites et avec un niveau d'intégrité conformes aux objectifs de sécurité fixés pour la phase de vol. Cela est notamment rendu possible par le fait que la solution de localisation par radar décrite précédemment est indépendante des solutions conventionnelles (inertielles et de radionavigation).

L'homme du métier comprendra que cette phase de comparaison 120 comprend une étape préalable de changement de repère des coordonnées de la première position et de la deuxième position obtenues pour les mettre dans un même repère géométrique. En effet, la deuxième position est, par exemple, exprimée dans le repère lié au sol (piste d'atterrissage par exemple), alors que la première position est, par exemple, exprimée dans le repère géographique terrestre WGS-84. Par exemple, étant donné que les contraintes d'approche et d'atterrissage sont exprimées relativement à la piste d'atterrissage, la première position et la deuxième position sont de préférence ramenées dans le repère de la piste d'atterrissage.

Dans un deuxième mode de mise en œuvre, la phase de comparaison 120 comprend l'affichage, sur un afficheur du dispositif de localisation 24, d'une image de la zone survolée déterminée parmi un ensemble d'images d'une base de données en fonction de la première position. L'image est en effet choisie en fonction de la première position de sorte à afficher la zone courante survolée par l'aéronef 12. L'image affichée comprend donc les éléments caractéristiques de la zone survolée par l'aéronef 12. La base de données est, par exemple, mémorisée dans une mémoire du calculateur 29.

Un tel affichage est, par exemple, du type SVGS (en anglais « Synthetic Vision Guidance Systems » traduit en français par « système de guidage par vision synthétique »). Le SVGS est une procédure d'approche aux instruments avec guidage vertical qui réduit à 150 pieds la hauteur de décision par rapport à la hauteur standard de 200 pieds pour une approche de catégorie I. Une telle approche est notamment définie dans les normes RTCA DO-359, AC 20-167A et AC 20-185. Dans le SVGS, la localisation de l'aéronef 12 est la base tant du système de guidage que du système de visualisation synthétique.

La phase d'affichage comprend, en outre, la superposition sur l'image affichée d'une représentation des éléments caractéristiques 16 de la zone survolée, ces éléments représentés ayant été détectés par le radar 32 lors de la détermination de la deuxième position. Les représentations des éléments caractéristiques 16 sont par exemple des symboles, tels que des croix ou des ronds. Ces représentations visent à représenter les éléments caractéristiques 16 par leur position.

La première position est alors validée lorsque les représentations des éléments caractéristiques 16 superposés sur l'image ont sensiblement la même position sur l'image que les éléments caractéristiques 16 correspondants déjà présents sur l'image. La première position est invalidée sinon. Cela permet aussi de donner plus d'informations au pilote et de le rassurer sur la viabilité de la localisation effectuée.

Ainsi, dans ce mode de réalisation, les données associées à la première position comprennent l'image déterminée dans la base de données en fonction de la première position. Les données associées à la deuxième position comprennent les représentations des éléments caractéristiques 16 détectés par le radar et à partir desquels a été obtenue la deuxième position.

Il est à noter que le premier mode de mise en œuvre et le deuxième mode de mise en œuvre de la phase de comparaison 120 sont propres à être combinés.

Optionnellement, le procédé de localisation comprend une phase 130 de modification de la trajectoire de l'aéronef 12 lorsque la première position est invalidée, par exemple lorsqu'une alerte est déclenchée. La phase de modification 130 est mise en œuvre par le calculateur 29. Optionnellement, cette phase est mise en œuvre automatiquement (pilote automatique). En variante, elle est mise en œuvre par le pilote ou par l'équipage.

Typiquement, la modification de la trajectoire consiste en une reprise d'altitude de l'aéronef 12 lorsque les conditions pour un atterrissage ne sont pas remplies, c'est-à-dire qu'une alerte a été déclenchée.

Optionnellement, lorsque la première position a été validée, le procédé de localisation comprend une phase 140 de fusion de la première et de la deuxième position pour obtenir une position optimisée. Cela permet d'augmenter la précision de la localisation obtenue.

Dans un exemple de mise en œuvre, la phase de fusion 140 comprend la fusion des localisations obtenues lors de la première phase de détermination 100 et de la deuxième phase de détermination 110 au moyen d'un filtre de Kalman.

Ainsi, le présent procédé permet de consolider une localisation effectuée par une méthode de localisation conventionnelle (inertielle, radionavigation) via une localisation radar. Notamment, lorsque les objectifs de sécurité d'une navigation aérienne ne peuvent être atteints à l'aide des méthodes conventionnelles de localisation (par exemple lors de phases d'approche et d'atterrissage sans visibilité), la localisation radar permet de valider la localisation conventionnelle.

De cette façon, le procédé permet d'augmenter le niveau d'intégrité et/ou de continuité et/ou de précision d'une ou plusieurs solutions conventionnelles de localisation. La localisation est, ainsi, plus fiable et sécuritaire.

Le guidage automatique d'un aéronef (pilote automatique) est fondé sur l'écart de sa position par rapport à la trajectoire idéale d'approche (en anglais « final approach segment »). Les déviations latérales et verticales sont, par exemple, exprimées sous forme métrique ou angulaire (norme DO-253). En approche et atterrissage de catégorie supérieure à I, la norme AC 120-118 requiert une intégrité de la solution de localisation supérieure à $1 - 10^{-7}$ et une précision angulaire meilleure que 0,2° en vertical et meilleure que 0,4° en latéral. Le présent procédé permet d'atteindre de tels niveaux d'intégrité par la consolidation d'une méthode de localisation conventionnelle avec la méthode radar décrite.

Par exemple, le procédé est adapté à être utilisé lors d'une phase de descente d'un aéronef sous les 200 pieds de hauteur et d'atterrissage sur une piste d'atterrissage sans visibilité au moyen d'une solution de localisation conventionnelle de type ILS (de l'anglais « Instrument Landing System » traduit en français par « Système d'atterrissage aux instruments ») catégorie I et/ou LPV (approche de précision avec navigation verticale satellitaire) augmentée de la solution de localisation par radar décrite précédemment.

Par exemple, en phase d'approche et d'atterrissage, en dessous d'une altitude ou hauteur de décision, l'équipage ou le pilote doit avoir acquis les références visuelles nécessaires à l'atterrissage (rampes de feux d'approche, seuil et bord de piste, zone de touche des roues). Le dispositif de localisation 24 permet d'abaisser le seuil de décision en-dessous des valeurs usuelles puisqu'elles sont déterminées par les solutions de localisation conventionnelle. Ainsi, lorsque cela n'est pas possible, et qu'une alerte est enclenchée, l'approche pour l'atterrissage est interrompue et l'aéronef reprend de l'altitude.

La localisation radar mise en œuvre s'affranchit d'une base de données d'images et est donc utilisable sur tous types de zones survolées, même lorsque celle-ci n'est pas référencée. La solution radar mise en œuvre est également plus simple à embarquer dans un aéronef, contrairement à une solution basée sur une base de données occupant un volume mémoire important. En outre, le procédé décrit ne requiert ni modifications, ni compléments à apporter aux infrastructure du lieu d'atterrissage (aéroports).

L'homme du métier comprendra que les modes de réalisation décrits précédemment sont susceptibles d'être combinés entre eux lorsqu'une telle combinaison est compatible.

Par exemple, l'un des exemples d'application concerne l'atterrissage de l'aéronef sur une piste d'atterrissage. Néanmoins, le présent procédé s'applique également à d'autres lieux d'atterrissage, tels que les héliports dans le cas des hélicoptères, ou encore des atterrissages en dehors d'un lieu d'atterrissage conventionnel. De même, le présent procédé s'applique à d'autres phases de vol, telles que le roulage, le décollage, la croisière ou encore la descente.

**Revendications**

1. Procédé de localisation d'un aéronef (12) en vol, l'aéronef (12) survolant une zone de l'espace (9) comprenant au sol des éléments caractéristiques (16) disposés en au moins une rangée (18A, 18B, 20A, 20B, 20C), le procédé de localisation étant mis en œuvre par un dispositif de localisation (24) porté par l'aéronef (12), le dispositif de localisation (24) comprenant une première unité de localisation (26) et une deuxième unité de localisation (28), la première unité de localisation (26) comprenant au moins un capteur choisi parmi un capteur inertiel et un capteur de radionavigation, la deuxième unité de localisation (28) comprenant un radar (32), la zone survolée étant un lieu d'atterrissage de l'aéronef (12) et les éléments caractéristiques (16) étant des éléments caractéristiques du lieu d'atterrissage, tels que des balises, le lieu d'atterrissage comprenant une piste d'atterrissage (10) ayant un axe longitudinal à égal distance des bords longitudinaux de la piste, appelé axe de la piste (Y), les éléments caractéristiques (16) étant répartis sur la piste d'atterrissage (10) en au moins deux rangées longitudinales (18A, 18B) et au moins une rangée transversale (20A, 20B, 20C), les rangées longitudinales (18A, 18B) étant sensiblement parallèles à l'axe de la piste (Y), deux des rangées longitudinales (18A, 18B) étant disposées chacune le long d'un bord longitudinal distinct de la piste (10), la ou chaque rangée transversale (20A, 20B, 20C) étant sensiblement perpendiculaire à l'axe de la piste (Y), la dernière rangée transversale (20A) dans le sens d'atterrissage des aéronefs sur la piste (10) étant appelée seuil de piste, le procédé comprenant :

   a. une première phase de détermination d'une position de l'aéronef (12), dite première position, par la première unité de localisation (26) en fonction d'un signal fourni par le ou au moins un capteur,
   b. simultanément à la première phase de détermination, une deuxième phase de détermination d'une position de l'aéronef (12), dite deuxième position, par la deuxième unité de localisation (28), la deuxième phase de détermination comprenant :

      i. la détection, par le radar (32), des éléments caractéristiques (16) de la zone survolée, chaque détection étant associée à des coordonnées,
      ii. la détermination, en fonction des coordonnées des éléments détectés, de :

         1. la distance de la projection orthogonale sur la droite passant par la ou au moins l'une des rangées (18A, 18B, 20A, 20B, 20C) d'éléments de la projetée horizontale ($P_H$) du radar (32), dite première distance (D1), la projetée horizontale ($P_H$) du radar (32) étant la projection orthogonale de la position du radar (32) au sol, la première distance (D1) étant la distance de la projection orthogonale sur l'axe de la piste (Y) de la projetée horizontale ($P_H$) du radar (32), appelée décalage axial ($D_A$),
         2. la distance de la projection orthogonale sur une droite, perpendiculaire à la ou au moins l'une des rangées (18A, 18B, 20A, 20B, 20C) d'éléments, de la projetée horizontale ($P_H$) du radar (32), dite deuxième distance (D2), la deuxième distance (D2) étant la distance de la projection orthogonale sur la droite passant par le seuil de piste de la projetée horizontale ($P_H$) du radar (32), appelée distance au seuil de piste ($D_{SHT}$),

      iii. la détermination de la deuxième position en fonction de la première et de la deuxième distance (D1, D2) déterminées.

   c. une phase de comparaison de données associées à la première position et de données associées à la deuxième position à l'issue de laquelle la première position est validée ou est invalidée.

2. Procédé selon la revendication 1, dans lequel la phase de comparaison comprend le déclenchement d'une alerte lorsque la première position est invalidée, le procédé comprenant une phase de modification de la trajectoire de l'aéronef (12) lorsqu'une alerte est déclenchée.

3. Procédé selon la revendication 1 ou 2, dans lequel la première position est associée à un premier écart-type et la deuxième position est associée à un deuxième écart-type, l'incertitude sur la première position étant matérialisée par un premier ellipsoïde dont le centre est la première position et le rayon est fonction du premier écart-type, l'incertitude sur la deuxième position étant matérialisée par un deuxième ellipsoïde dont le centre est la deuxième position et le rayon est fonction du deuxième écart-type, la première position étant invalidée lors de la phase de comparaison lorsque le deuxième ellipsoïde et le premier ellipsoïde sont disjoints.

4. Procédé selon la revendication 3, dans lequel lorsque la première position a été validée, le procédé comprend une phase de fusion de la première et de la deuxième position pour obtenir une position optimisée de l'aéronef (12).

5. Procédé selon l'une quelconque des revendications 1 à 4, dans lequel la phase de comparaison comprend l'affichage, sur un afficheur du dispositif de localisation (24), d'une image de la zone survolée déterminée, en fonction de la première position, parmi un ensemble d'images d'une base de données, l'image affichée comprenant les éléments caractéristiques de la zone survolée par l'aéronef (12), la phase de comparaison comprenant, en outre, la superposition sur l'image affichée d'une représentation des éléments caractéristiques (16) de la zone survolée qui ont été détectés par le radar (32) lors de la détermination de la deuxième position, la première position étant validée lorsque les éléments caractéristiques superposés sur l'image ont sensiblement la même position sur l'image affichée que les éléments caractéristiques correspondants déjà présents sur l'image affichée, et étant invalidée sinon.

6. Procédé selon l'une quelconque des revendications 1 à 5, dans lequel la phase de détermination de la deuxième position comprend la détermination du décalage angulaire (T) entre l'axe du radar ($Y_R$) et une droite parallèle ou perpendiculaire à la ou au moins l'une des rangées (18A, 18B, 20A, 20B, 20C) d'éléments, dite droite de référence, la première distance (D1) et la deuxième distance (D2) étant déterminées en fonction du décalage angulaire déterminé.

7. Procédé selon la revendication 6, dans lequel lors de la phase de détermination de la deuxième position, la détermination du décalage angulaire (T) comprend :

   a. la conversion des coordonnées de chaque détection en coordonnées cartésiennes,
   b. pour chaque valeur de décalage angulaire ($T_{test}$) comprise dans un intervalle de valeurs prédéterminées, la détermination, pour chaque détection, d'une coordonnée cartésienne selon l'axe des abscisses, corrigée de la valeur dudit décalage angulaire ($T_{test}$),
   c. pour chaque valeur de décalage angulaire ($T_{test}$) comprise dans l'intervalle de valeurs prédéterminées, la détermination du nombre de détections correspondant à chaque coordonnée cartésienne corrigée selon l'axe des abscisses, la valeur de décalage angulaire ($T_{test}$) associée au plus grand nombre de détections étant le décalage angulaire (T) entre l'axe du radar ($Y_R$) et la droite de référence.

8. Procédé selon la revendication 6 ou 7, dans lequel la droite de référence est l'axe de la piste (Y), lors de la phase de détermination de la deuxième position, la détermination de distances comprend :

   a. le calcul des coordonnées cartésiennes de chaque détection, corrigées du décalage angulaire (T) déterminé à l'étape de détermination, dites coordonnées cartésiennes optimales,
   b. la détermination d'un histogramme des positions selon l'axe des abscisses de chaque détection en fonction des coordonnées cartésiennes optimales de chaque détection, l'histogramme ayant au moins deux pics, et
   c. la détermination du décalage axial ($D_A$) en fonction des coordonnées cartésiennes selon l'axe des abscisses d'au moins les deux pics de l'histogramme.

9. Procédé selon l'une quelconque des revendications 6 à 8, dans lequel la droite de référence est l'axe de la piste (Y), lors de la phase de détermination de la deuxième position, la détermination de distances comprend :

   a. le calcul des coordonnées cartésiennes de chaque détection, corrigées du décalage angulaire (T) déterminé à l'étape de détermination, dite coordonnées cartésiennes optimales,
   b. la détermination d'un histogramme des positions selon l'axe des ordonnées de chaque détection en fonction des coordonnées cartésiennes optimales de chaque détection, l'histogramme ayant au moins un pic, et
   c. la détermination de la distance au seuil de piste ($D_{SHT}$) en fonction des coordonnées cartésiennes selon l'axe des ordonnées du ou des pics de l'histogramme.

10. Dispositif (24) de localisation d'un aéronef (12) en vol, l'aéronef (12) survolant une zone de l'espace (9) comprenant au sol des éléments caractéristiques (16) disposés en au moins une rangée (18A, 18B, 20A, 20B, 20C), le dispositif électronique de localisation (24) étant porté par l'aéronef (12), le dispositif de localisation (24) comprenant une première unité de localisation (26) et une deuxième unité de localisation (28), la première unité de localisation (26) comprenant au moins un capteur choisi parmi un capteur inertiel et un capteur de radionavigation, la deuxième unité de localisation (28) comprenant un radar (32), le dispositif de localisation étant configuré pour mettre en œuvre un procédé selon l'une quelconque des revendications 1 à 9.

**11.** Aéronef comprenant un dispositif de localisation (24) selon la revendication 10.

**Patentansprüche**

**1.** Ortungsverfahren eines Luftfahrzeugs (12) im Flugs, wobei das Luftfahrzeug (12) eine Zone des Raums (9) überfliegt, umfassend am Boden charakteristische Elemente (16), die in mindestens einer Reihe (18A, 18B, 20A, 20B, 20C) angeordnet sind, wobei das Ortungsverfahren von einer Ortungsvorrichtung (24) durchgeführt wird, die von dem Luftfahrzeug (12) getragen wird, die Ortungsvorrichtung (24) eine erste Ortungeinheit (26) und eine zweite Ortungeinheit (28) umfasst, die erste Ortungeinheit (26) mindestens einen Sensor umfasst, der ausgewählt ist aus einem Trägheitssensor und einem Funknavigationssensor, die zweite Ortungeinheit (28) umfassend ein Radar (32), wobei der überflogene Bereich ein Landeplatz des Luftfahrzeugs (12) ist und die charakteristischen Elemente (16) charakteristische Elemente des Landeplatzes sind, wie z. B. Baken, der Landeplatz umfassend eine Landebahn (10), die eine Längsachse in gleichem Abstand von den Längsränder der Bahn aufweist, die als Bahnachse (Y) bezeichnet wird, wobei die charakteristischen Elemente (16) auf der Landebahn (10) in mindestens zwei Längsreihen (18A, 18B) und mindestens einer Querreihe (20A, 20B, 20C) verteilt sind, wobei die Längsreihen (18A, 18B) im Wesentlichen parallel zu der Achse der Bahn (Y) sind, zwei der Längsreihen (18A, 18B) jeweils entlang eines separaten Längsrands der Bahn (10) angeordnet sind, wobei die oder jede Querreihe (20A, 20B, 20C) im Wesentlichen senkrecht zu der Achse der Bahn (Y) ist, die letzte Querreihe (20A) in der Richtung, in der die Luftfahrzeuge auf der Landebahn (10) landen, als Landebahnschwelle bezeichnet wird, das Verfahren umfassend:

a. eine erste Phase eines Bestimmens einer Position des Luftfahrzeugs (12), der sogenannten ersten Position, durch die erste Ortungeinheit (26) abhängig von einem Signal, das von dem oder mindestens einem Sensor bereitgestellt wird,
b. gleichzeitig mit der ersten Bestimmungsphase eine zweite Phase eines Bestimmens einer Position des Luftfahrzeugs (12), der sogenannten zweiten Position, durch die zweite Ortungeinheit (28), die zweite Be-stimmungsphase umfassend:

i. das Erfassen der charakteristischen Elemente (16) des überflogenen Bereichs durch das Radar (32), wobei jede Erfassung mit Koordinaten assoziiert ist,
ii. das Bestimmen, abhängig von den Koordinaten der erfassten Elemente, von:

1. dem Abstand der orthogonalen Projektion auf die Gerade, die durch die oder mindestens eine der Reihen (18A, 18B, 20A, 20B, 20C) von Elementen der horizontalen Projektion ($P_H$) des Radars (32) verläuft, die als erster Abstand (D1) bezeichnet wird, wobei die horizontale Projektion ($P_H$) des Radars (32) die orthogonale Projektion der Position des Radars (32) am Boden ist, wobei der erste Abstand (D1) der Abstand der orthogonalen Projektion der horizontalen Projektion ($P_H$) des Radars (32) auf der Achse der Bahn (Y) ist, der als Axialverschiebung ($D_A$) bezeichnet wird,
2. dem Abstand der orthogonalen Projektion auf eine Gerade senkrecht zu der oder mindestens einer der Reihen (18A, 18B, 20A, 20B, 20C) von Elementen, von der horizontalen Projektion ($P_H$) des Radars (32), der als zweiter Abstand (D2) bezeichnet wird, wobei der zweite Abstand (D2) der Abstand der orthogonalen Projektion auf die durch die Bahnschwelle verlaufende Gerade der horizontalen Projektion ($P_H$) des Radars (32) ist, die als Entfernung zur Bahnschwelle ($D_{SHT}$) bezeichnet wird,

iii. das Bestimmen der zweiten Position abhängig von dem bestimmten ersten und zweiten Abstand (D1, D2).

c. eine Phase eines Vergleichens von Daten, die mit der ersten Position assoziiert sind, mit Daten, die mit der zweiten Position assoziiert sind, an deren Ende die erste Position bestätigt oder für ungültig erklärt wird.

**2.** Verfahren nach Anspruch 1, wobei die Vergleichsphase das Auslösen eines Alarms umfasst, wenn die erste Position ungültig ist, das Verfahren umfassend eine Phase eines Änderns der Flugbahn des Luftfahrzeugs (12), wenn ein Alarm ausgelöst wird.

**3.** Verfahren nach Anspruch 1 oder 2, wobei die erste Position mit einer ersten Standardabweichung und die zweite Position mit einer zweiten Standardabweichung assoziiert ist, wobei die Unsicherheit über die erste Position durch ein erstes Ellipsoid materialisiert wird, dessen Mittelpunkt die erste Position ist und dessen Radius abhängig von der ersten Standardabweichung ist, wobei die Unsicherheit über die zweite Position durch ein zweites Ellipsoid materialisiert wird, dessen Mittelpunkt die zweite Position ist und dessen Radius abhängig von der zweiten Standardabweichung ist, wobei die erste Position in der Vergleichsphase ungültig gemacht wird, wenn das zweite Ellipsoid und das erste Ellipsoid disjunkt sind.

4. Verfahren nach Anspruch 3, wobei, wenn die erste Position validiert wurde, das Verfahren eine Phase umfasst, in der die erste und die zweite Position zusammengeführt werden, um eine optimierte Position des Luftfahrzeugs (12) zu erlangen.

5. Verfahren nach einem der Ansprüche 1 bis 4, wobei die Vergleichsphase die Anzeige auf einer Anzeige der Ortungsvorrichtung (24) eines Bilds des überflogenen Bereichs umfasst, das abhängig von der ersten Position aus einem Satz von Bildern einer Datenbank bestimmt wird, das angezeigte Bild umfassend die charakteristischen Elemente des von dem Luftfahrzeug (12) überflogenen Bereichs, wobei die Vergleichsphase ferner ein Überlagern des angezeigten Bilds mit einer Darstellung der charakteristischen Elemente (16) des überflogenen Bereichs umfasst, die von dem Radar (32) beim Bestimmen der zweiten Position erfasst wurden, wobei die erste Position validiert wird, wenn die auf dem Bild überlagerten charakteristischen Elemente im Wesentlichen die gleiche Position auf dem angezeigten Bild aufweisen wie die entsprechenden charakteristischen Elemente, die bereits auf dem angezeigten Bild vorhanden sind, und andernfalls ungültig gemacht wird.

6. Verfahren nach einem der Ansprüche 1 bis 5, wobei die Bestimmungsphase der zweiten Position ein Bestimmen der Winkelverschiebung (T) zwischen der Achse des Radars ($Y_R$) und einer Geraden parallel oder senkrecht zu der oder mindestens einer der Reihen (18A, 18B, 20A, 20B, 20C) von Elementen, der sogenannten Bezugsgeraden, umfasst, wobei der erste Abstand (D1) und der zweite Abstand (D2) abhängig von der bestimmten Winkelverschiebung bestimmt werden.

7. Verfahren nach Anspruch 6, wobei in der Bestimmungsphase der zweiten Position ein Bestimmen der Winkelverschiebung (T) Folgendes umfasst:

a. die Umrechnung der Koordinaten jeder Erfassung in kartesische Koordinaten,
b. für jeden Wert der Winkelverschiebung ($T_{test}$), die in einem Intervall von vorbestimmten Werten liegt, für jede Erfassung das Bestimmen einer kartesischen Koordinate entlang der Abszissenachse, korrigiert um den Wert der genannten Winkelverschiebung ($T_{test}$),
c. für jeden Wert der Winkelverschiebung ($T_{test}$), die in dem vorbestimmten Wertebereich liegen, das Bestimmen der Anzahl von Erfassungen, die jeder korrigierten kartesischen Koordinate entlang der Abszissenachse entsprechen, wobei der Winkelverschiebungswert ($T_{test}$), der mit der größten Anzahl von Erfassungen assoziiert ist, die Winkelverschiebung (T) zwischen der Achse des Radars ($Y_R$) und der Bezugsgeraden ist.

8. Verfahren nach Anspruch 6 oder 7, wobei die Bezugsgerade die Achse der Bahn (Y) ist, wobei die Abstandsbestimmung bei der Bestimmungsphase der zweiten Position Folgendes umfasst:

a. Berechnen der kartesischen Koordinaten jeder Erfassung, die um die im Bestimmungsschritt bestimmte Winkelverschiebung (T) korrigiert sind, die sogenannten optimalen kartesischen Koordinaten,
b. Bestimmen eines Histogramms der Positionen entlang der Abszissenachse jeder Erfassung abhängig von den optimalen kartesischen Koordinaten jeder Erfassung, wobei das Histogramm mindestens zwei Spitzen aufweist, und
c. Bestimmen des axialen Versatzes ($D_A$) abhängig von den kartesischen Koordinaten entlang der Abszissenachse von mindestens den beiden Spitzen des Histogramms.

9. Verfahren nach einem der Ansprüche 6 bis 8, wobei die Bezugsgerade die Achse der Bahn (Y) ist, wobei die Abstandsbestimmung bei der Bestimmungsphase der zweiten Position Folgendes umfasst:

a. Berechnen der kartesischen Koordinaten jeder Erfassung, die um die im Bestimmungsschritt bestimmte Winkelverschiebung (T) korrigiert sind, die sogenannten optimalen kartesischen Koordinaten,
b. Bestimmen eines Histogramms von Positionen entlang der Ordinatenachse jeder Erfassung abhängig von den optimalen kartesischen Koordinaten jeder Erfassung, wobei das Histogramm mindestens einen Peak aufweist, und
c. Bestimm des Abstands zu der Bahnschwelle ($D_{SHT}$) anhand der kartesischen Koordinaten entlang der Ordinatenachse des/der Peaks in dem Histogramm.

10. Vorrichtung (24) zur Ortung eines Luftfahrzeugs (12) im Flug, wobei das Luftfahrzeug (12) einen Bereich des Raums (9) überfliegt, der am Boden charakteristische Elemente (16) umfasst, die in mindestens einer Reihe (18A, 18B, 20A, 20B, 20C) angeordnet sind, die elektronische Ortungsvorrichtung (24) von dem Luftfahrzeug (12) getragen wird, wobei die Ortungsvorrichtung (24) eine erste Ortungseinheit (26) und eine zweite Ortungseinheit (28) umfasst, die erste Ortungseinheit (26) mindestens einen Sensor umfasst, der ausgewählt ist aus einem Trägheitssensor und einem Funknavigationssensor, und die zweite Ortungseinheit (28) ein Radar (32) umfasst, wobei die Ortungsvorrichtung konfiguriert ist, um ein Verfahren nach einem der Ansprüche 1 bis 9 durchzuführen.

11. Luftfahrzeug, umfassend eine Ortungsvorrichtung (24) nach Anspruch 10.

**Claims**

1. Method for locating an aircraft (12) in-flight, the aircraft (12) overflying a zone of space (9) comprising on the ground, characteristic elements (16) arranged in at least one row (18A, 18B, 20A, 20B, 20C), the locating method being implemented by a locating device (24) borne by the aircraft (12), the locating device (24) comprising a first locating unit (26) and a second locating unit (28), the first locating unit (26) comprising at least one sensor selected from an inertial sensor and a radionavigation sensor, the second locating unit (28) comprising a radar (32), the overflown zone being a landing site of the aircraft (12) and the characteristic elements (16) being characteristic elements of the landing site, such as beacons, the landing site comprising a runway (10) having a longitudinal axis equidistant from the longitudinal edges of the runway, called runway centerline (Y), the characteristic elements (16) being distributed over the runway (10) in at least two longitudinal rows (18A, 18B) and at least one transverse row (20A, 20B, 20C), the longitudinal rows (18A, 18B) being substantially parallel to the runway centerline (Y), two of the longitudinal rows (18A, 18B) being each arranged along a distinct longitudinal edge of the runway (10), the or each transverse row (20A, 20B, 20C) being substantially perpendicular to the runway centerline (Y), the last transverse row (20A) along the direction of aircraft landing on the runway (10) being called the runway threshold, the method comprising:

   a. a first phase of determining a position of the aircraft (12), called first position, by the first locating unit (26) as a function of a signal supplied by the or at least one sensor,
   b. simultaneously with the first determination phase, a second determination phase of a position of the aircraft (12), called second position, by the second locating unit (28), the second determination phase comprising:

      i. the detection, by the radar (32), of the characteristic elements (16) of the zone overflown, each detection being associated with coordinates,
      ii. the determination, according to the coordinates of the detected elements, of:

         1. the distance of the orthogonal projection on the straight line passing through the or at least one of the rows (18A, 18B, 20A, 20B, 20C) of elements of the horizontal projection ($P_H$) of the radar (32), called the first distance (D1), the horizontal projection ($P_H$) radar (32) being the orthogonal projection of the position of radar (32) on the ground, the first distance (D1) being the distance from the orthogonal projection on the runway centerline (Y) of the horizontal projection ($P_H$) of the radar (32), called axial offset ($D_A$),
         2. the distance of the orthogonal projection on a line perpendicular to the or at least one of the rows (18A, 18B, 20A, 20B, 20C) of elements, the horizontal projection ($P_H$) of the radar (32), called the second distance (D2), the second distance (D2) being the distance from the orthogonal projection on the straight line passing through the runway threshold of the horizontal projection ($P_H$) of the radar (32), called the distance to the runway threshold ($D_{SHT}$),

      iii. determining the second position according to the determined first and second distances (D1, D2).

   c. a phase of comparing data associated with the first position and data associated with the second position after which the first position is either validated or invalidated.

2. The method according to claim 1, wherein the comparison step comprises triggering an alert when the first position is invalidated, the method comprising a phase of modifying the trajectory of the aircraft (12) when an alert is triggered.

3. The method according to claim 1 or 2, wherein the first position is associated with a first standard deviation and the second position is associated with a second standard deviation, the uncertainty on the first position showing as a first ellipsoid, the center of which is the first position and the radius of which depends on the first standard deviation, the uncertainty on the second position showing as a second ellipsoid, the center of which is the second position and the radius depends on the second standard deviation, the first position being invalidated during the comparison phase when the second ellipsoid and the first ellipsoid are disjoint.

4. The method according to claim 3, wherein when the first position has been validated, the method comprises a step of merging the first and second positions so as to obtain an optimized position of the aircraft (12).

5. The method according to any of claims 1 to 4, wherein the comparison phase comprises the display, on a display of the locating device (24), of an image of the zone overflown which was determined, according to the first position, from a set of images in a database, the displayed image comprising the characteristic elements of the zone overflown by the aircraft (12), the comparison phase further comprising the superposition over the displayed image of a representation of the characteristic elements (16) of the zone overflown which were detected by the radar (32) during the determination of the second position, the first position being validated when the characteristic elements superimposed over the image have substantially the same position on the displayed image as the corresponding characteristic elements already present on the displayed image, and being invalidated otherwise;

6. The method according to any of claims 1 to 5, wherein the step of determining the second position comprises the determination of the angular offset (T) between the radar axis ($Y_R$) and a line parallel or perpendicular to the or at least one of the rows (18A, 18B, 20A, 20B, 20C) of elements, called the reference line, the first distance (D1) and the second distance (D2) being determined according to the determined angular offset.

7. The method according to claim 6, wherein in the step of determining the second position, the determination the angular offset (T) comprises:

   a. the conversion of the coordinates of each detection into Cartesian coordinates,
   b. for each value of angular offset ($T_{test}$) comprised within a range of predetermined values, the determination, for each detection, of a Cartesian coordinate along the abscissa axis, corrected for the value of said angular offset ($T_{test}$),
   c. for each angular offset value ($T_{test}$) within the range of predetermined values, the determination of the number of detections corresponding to each Cartesian coordinate corrected along the abscissa axis, the angular offset value ($T_{test}$) associated with the greatest number of detections being the angular offset (T) between the radar axis ($Y_R$) and the reference line.

8. The method according to claim 6 or 7, wherein the reference line is the runway centerline (Y), during the phase of determining the second position, the distance determination comprises:

   a. the calculation of the Cartesian coordinates of each detection, corrected for the angular offset (T) determined in the determination step, called optimal Cartesian coordinates,
   b. the determination of a histogram of the positions along the x-axis of each detection as a function of the optimal Cartesian coordinates of each detection, the histogram having at least two peaks, and
   c. the determination of the axial offset ($D_A$) according to the Cartesian coordinates along the abscissa axis of at least the two peaks of the histogram.

9. The method according to any of claims 6 to 8, wherein the reference line is the runway centerline (Y), during the phase of determining the second position, the distance determination comprises:

   a. the calculation of the Cartesian coordinates of each detection, corrected for the angular offset (T) determined in the determination step, called optimal Cartesian coordinates,
   b. the determination of a histogram of the y-axis positions of each detection according to the optimal Cartesian coordinates of each detection, the histogram having at least one peak, and
   c. the determination of the distance to the runway threshold ($D_{SHT}$) according to the Cartesian coordinates along the y-axis of the peak(s) of the histogram.

10. A device (24) for locating an aircraft (12) in-flight, the aircraft (12) overflying a zone of space (9) comprising on the ground, characteristic elements (16) arranged in at least one row (18A, 18B, 20A, 20B, 20C), the electronic locating device (24) being borne by the aircraft (12), the locating device (24) comprising a first locating unit (26) and a second locating unit (28), the first locating unit (26) comprising at least one sensor selected from an inertial sensor and a radionavigation sensor, the second locating unit (28) comprising a radar (32), the locating device being configured for implementing a method according to any of claims 1 to 9.

11. An aircraft comprising a locating device (24) according to claim 10.

FIG.1

## FIG.2

## FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10705201 B
- EP 3179275 A